Europäisches Patentamt

European Patent Office

Office européen des brevets

(19)

(11) **EP 0 815 498 B1**

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(21) Anmeldenummer: **95913032.9**

(22) Anmeldetag: **16.03.1995**

(51) Int Cl.$^6$: **G05B 13/02**

(86) Internationale Anmeldenummer:
**PCT/DE95/00366**

(87) Internationale Veröffentlichungsnummer:
**WO 96/28770 (19.09.1996 Gazette 1996/42)**

(54) **VERFAHREN UND VORRICHTUNG ZUR FÜHRUNG EINES PROZESSES**

PROCESS CONTROLLING METHOD AND DEVICE

PROCEDE ET DISPOSITIF DE COMMANDE D'UN PROCESSUS

(84) Benannte Vertragsstaaten:
**BE DE FR GB IT SE**

(43) Veröffentlichungstag der Anmeldung:
**07.01.1998 Patentblatt 1998/02**

(73) Patentinhaber: **SIEMENS AKTIENGESELLSCHAFT**
**80333 München (DE)**

(72) Erfinder:
• **YUAN, Hao**
**D-91052 Erlangen (DE)**

• **BERGHS, Andre**
**D-91077 Neunkirchen (DE)**

(56) Entgegenhaltungen:
**DE-A- 4 416 364**

• **PROCEEDINGS OF THE 1992 AMERICAN CONTROL CONFERENCE, Bd.1, 24. Juni 1992, USA Seiten 545 - 549 C.KU ET AL 'SYSTEM IDENTIFICATION AND CONTROL USING DIAGONAL RECURRENT NEURAL NETWORKS'**

**Beschreibung**

Die Erfindung betrifft ein Verfahren zur Führung eines Prozesses, wobei in einer Regeleinrichtung aus Meßwerten von Ausgangsgrößen des Prozesses Stellgrößen für mehrere, auf den Prozeß einwirkende Stellglieder berechnet werden. Die Erfindung betrifft ferner eine entsprechende Vorrichtung.

Ein solches Verfahren und eine solche Vorrichtung sind auch Gegenstand der älteren, zum Prioritätszeitpunkt dieser Anmeldung aber noch nicht veröffentlichten, internationalen Anmeldung PCT/DE94/00028.

Bei der Führung von Prozessen stehen oft mehrere Stellglieder zur Verfügung, um bestimmte Ausgangsgrößen des Prozesses zu beeinflussen. Dabei werden die Stellgrößen für die einzelnen Stellglieder in einer Regeleinrichtung in Abhängigkeit von Führungsgrößen berechnet, deren Werte die Ausgangsgrößen des Prozesses annehmen sollen. Ein Beispiel für eine solche Prozeßführung ist die Regelung der Bandplanheit in einer Walzanlage, wobei eine Beeinflussung des Walzspaltes und damit der Bandplanheit unter anderem durch eine Verschwenkung, Biegung, axiale Verschiebung und/oder bereichsweise Kühlung der Walzen in Abhängigkeit von über die Breite des gewalzten Bandes verteilten Meßwerten der Bandplanheit erfolgt.

Für eine gute Regelung der Ausgangsgrößen des Prozesses ist es von großer Wichtigkeit, daß der Regeleinrichtung Angaben über die Stellgliedwirksamkeiten, d. h. Angaben darüber, wie die einzelnen Stellglieder auf die Ausgangsgrößen wirken, zur Verfügung gestellt werden. Hier stellt sich das Problem, daß bei industriellen Anlagen vielfach keine oder nur unzureichende Angaben über die Stellgliedwirksamkeiten zur Verfügung stehen.

Es ist allgemein bekannt, daß sich beim Walzen von Metallbändern die Bandplanheit durch gleichzeitige Betätigung von mehreren walzspaltverändernden Stellgliedern verbessern läßt.

Aus der Hitachi Review 41 (1992) 1, Seiten 31 bis 38, ist es darüber hinaus bekannt, für die Bandplanheitsregelung in einem Walzgerüst jedem Stellglied des Walzgerüstes jeweils ein typisches Musterprofil der Bandplanheit zuzuordnen, von dem aufgrund von Erfahrungswissen über den Walzprozeß bekannt ist, daß es sich durch Betätigung des betreffenden Stellgliedes verbessern läßt. Hinter dem Walzgerüst wird das tatsächliche Profil der Bandplanheit gemessen und die so erhaltenen Meßwerte werden einem neuronalen Netzwerk zugeführt, welches als Netzwerkantwort angibt, zu welchen Anteilen sich das gemessene Profil der Bandplanheit aus den einzelnen Musterprofilen zusammensetzt. Die so erhaltenen Anteile werden in Fuzzy-Regeln zu Stellsignalen für die Stellglieder verknüpft. Das bekannte Verfahren beruht in sehr starkem Maße auf dem Erfahrungswissen des Walzers über die Wirkung der Stellglieder, das aber für eine optimale Prozeßführung vergleichsweise allgemein und ungenau ist. Ferner ist das eingebrachte Erfahrungswissen in der Regel an die jeweilige Anlage gebunden und kann nicht ohne weiteres auf andere Anlagen übertragen werden.

Der Erfindung liegt die Aufgabe zugrunde, ein Verfahren und eine Vorrichtung zur Führung eines Prozesses anzugeben, die unabhängig von vorhandenem Erfahrungswissen über den Prozeß eine optimale Führung des Prozesses ermöglichen.

Gemäß der Erfindung wird die Aufgabe durch das in Anspruch 1 angegebene Verfahren bzw. die in Anspruch 12 angegebene Vorrichtung gelöst.

Vorteilhafte Weiterbildungen des erfindungsgemäßen Verfahrens und der Vorrichtung ergeben sich aus den Unteransprüchen.

Mit dem erfindungsgemäßen Verfahren und der entsprechenden Vorrichtung werden bei normaler Führung des Prozesses aufgrund der Änderungen der während des Prozeßablaufs gemessenen Stellgrößen und Ausgangsgrößen des Prozesses die Stellgliedwirksamkeiten für die einzelnen Stellglieder automatisch gelernt und der Regeleinrichtung zur Verbesserung der Berechnung der Stellgrößen zugeführt. Dabei werden immer die Wirksamkeiten derjenigen Stellglieder gelernt, die gerade von der Regeleinrichtung angesteuert werden. Steuert die Regeleinrichtung also nur einen Teil der Stellglieder an, so werden auch nur die Wirksamkeiten dieser Stellglieder gelernt. Die übrigen Stellgliedwirksamkeiten werden jeweils dann gelernt, wenn die zugehörigen Stellglieder zum Einsatz kommen. Mit den so gelernten Stellgliedwirksamkeiten wird die Regeleinrichtung bei ihrer Berechnung der Stellgrößen unterstützt, ohne daß in die Regeleinrichtung selbst eingegriffen wird. Das erfindungsgemäße Verfahren kann also bei bestehenden Anlagen angewendet werden, wobei die dort vorhandenen Regeleinrichtungen in gewohnter Weise eingesetzt werden.

Das Lernen der Stellgliedwirksamkeiten für die einzelnen Stellglieder erfolgt in einem neuronalen Netzwerk in Abhängigkeit von während des normalen Prozeßablaufs von der Regeleinrichtung vorgenommenen Änderungen der Stellgrößen und daraus resultierenden Änderungen der Ausgangsgrößen. Dabei können bei unverändertem Betriebspunkt des Prozesses die funktionalen Abhängigkeiten zwischen den Änderungen der Ausgangsgrößen des Prozesses und den Änderungen der Stellgrößen im Kleinsignalbereich linearisiert werden, so daß das neuronale Netzwerk lediglich eine Eingangsschicht und eine Ausgangsschicht aufweisen kann und dementsprechend einfach aufgebaut ist. In diesem neuronalen Netzwerk werden die ihm eingangsseitig zugeführten Stellgrößenänderungen $du_i$ über Netzwerkparameter $w_{ij}$, die den zu lernenden Stellgliedwirksamkeiten entsprechen, nach der Beziehung

$$d\tilde{y}_j \; = \; \sum_{i=1}^{n} w_{ij} \cdot du_i$$

zu Netzwerkantworten $d\tilde{y}_j$ verknüpft und die Netzwerkparameter $w_{ij}$ in Abhängigkeit von den Abweichungen zwischen den Netzwerkantworten und den Änderungen der Ausgangsgrößen im Sinne einer Verringerung dieser Abweichung verändert. Der Lernvorgang, in dem die Stellgliedwirksamkeiten in dem neuronalen Netzwerk gelernt werden, kann langsamen Änderungen des Betriebspunktes des Prozesses folgen. Darüber hinaus werden die für einen Betriebspunkt gelernten Stellgliedwirksamkeiten, insbesondere bei schnellen oder großen Änderungen des Betriebspunkts, abgespeichert; wenn der Prozeß wieder den Betriebspunkt aufweist, für den die abgespeicherten Stellgliedwirksamkeiten gelernt worden sind, werden diese Stellgliedwirksamkeiten wieder dem neuronalen Netzwerk als Netzwerkparameter zugeführt.

Um die Abhängigkeit der zu lernenden Stellgliedwirksamkeiten von dem veränderlichen Betriebspunkt des Prozesses umfassend zu berücksichtigen, wird vorzugsweise in dem Betriebsbereich, innerhalb dessen sich der Betriebspunkt ändern kann, eine vorgegebene Anzahl von Betriebsstützpunkten festgelegt, wobei die dem neuronalen Netzwerk eingangsseitig zugeführten Stellgrößenänderungen für jeden Betriebsstützpunkt jeweils mit einem Wichtungsfaktor gewichtet werden, der ein Maß für den Abstand zwischen dem aktuellen Betriebspunkt und dem jeweiligen Betriebsstützpunkt ist. In dem neuronalen Netzwerk werden dann die mit den Wichtungsfaktoren $o_a$ gewichteten Stellgrößenänderungen $o_a \cdot du_i$ nach der Beziehung

$$d\tilde{y}_j \; = \; \sum_{a=1}^{s} \; \sum_{i=1}^{n} \; w_{aij} \cdot o_a \cdot du_i$$

zu Netzwerkantworten $d\tilde{y}_j$ verknüpft, wobei $w_{aij}$ die einstellbaren Netzwerkparameter des neuronalen Netzwerkes und

$$\sum_{a=1}^{s} \; o_a \cdot w_{aij} \; = \; w_{ij}$$

die zu lernenden Stellgliedwirksamkeiten sind. Zur Adaption des neuronalen Netzwerkes werden die Netzwerkparameter $w_{aij}$ in Abhängigkeit von den Abweichungen zwischen den Netzwerkantworten und den Änderungen der Ausgangsgrößen des Prozesses im Sinne einer Verringerung dieser Abweichungen verändert.

Da die dem neuronalen Netzwerk als Eingangsgrößen zugeführten Stellgrößenänderungen verrauscht sein können, werden sie vorzugsweise zunächst einem Filter zugeführt, das Stellgrößenänderungen unterhalb eines vorgebbaren Schwellenwertes von dem neuronalen Netzwerk zurückhält.

Um beim Lernen der Stellgliedwirksamkeiten eine bessere und schnellere Konvergenz zu erreichen, werden vorzugsweise für jeden Lernschritt, bei dem die Netzwerkparameter verändert werden, jeweils mehrere Datensätze der Stellgrößen, Netzwerkantworten und Ausgangsgrößen herangezogen.

Im folgenden wird die Erfindung am Beispiel einer Bandplanheitsregelung in einer Walzanlage näher erläutert, wobei auf die Figuren der Zeichnung Bezug genommen wird. Im einzelnen zeigen

FIG 1     ein Ausführungsbeispiel der erfindungsgemäßen Vorrichtung mit einer Regeleinrichtung zur Bandplanheitsregelung in einer Walzanlage und mit einem neuronalen Netzwerk zum Lernen der Stellgliedwirksamkeiten,

FIG 2     ein Beispiel für das verwendete neuronale Netzwerk zum Lernen der Stellgliedwirksamkeiten für einen Betriebspunkt des Prozesses,

FIG 3     ein Beispiel für das Lernen der Stellgliedwirksamkeiten unter Verwendung mehrerer Datensätze,

FIG 4     ein weiteres Beispiel des verwendeten neuronalen Netzwerkes zum Lernen der Stellgliedwirksamkeiten für sich ändernde Betriebspunkte und

FIG 5     ein Diagramm zur Erläuterung der Bestimmung von Wichtungsfaktoren im Zusammenhang mit dem Lernen der Stellgliedwirksamkeiten in dem neuronalen Netzwerk nach FIG 4.

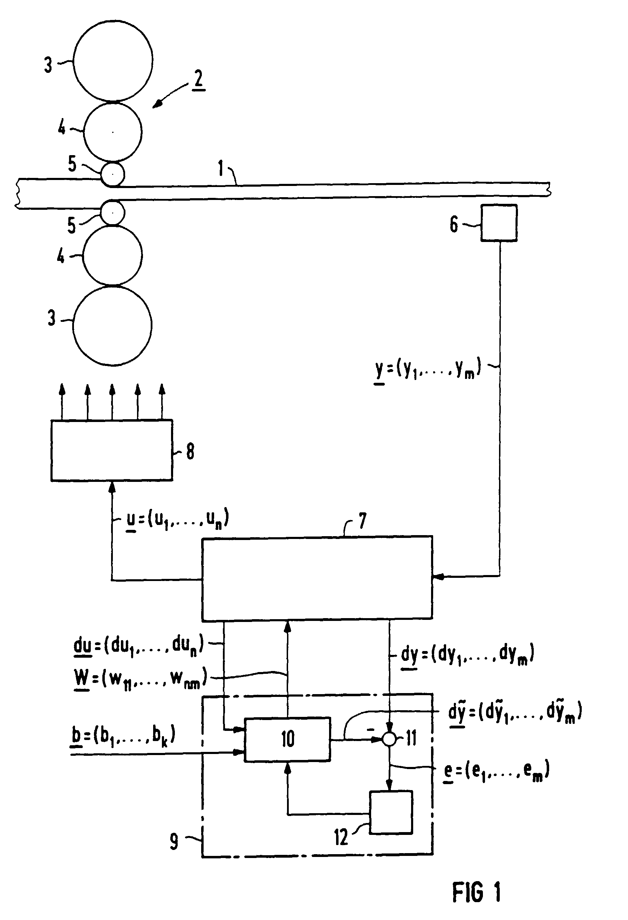

FIG 1 zeigt ein Beispiel für die erfindungsgemäße Vorrichtung, die zur Führung eines Prozesses, hier der Planheitsregelung eines Bandes 1 in einer Walzanlage dient. Die Walzanlage kann mehrere Walzgerüste aufweisen, von denen hier in Durchlaufrichtung des Bandes 1 das letzte Gerüst 2 mit Stützwalzen 3, Zwischenwalzen 4 und Arbeitswalzen 5 dargestellt ist. Die Walzen 3, 4 und 5 bilden zusammen mit bekannten und daher nicht eigens dargestellten Mitteln zum Anstellen, Schwenken, Biegen und Verschieben der Walzen sowie zum Kühlen vorgegebener Walzenzonen unterschiedliche Stellglieder zum Beeinflussen der Bandplanheit. Hinter dem Walzgerüst 2 ist ein Planheitsmeßgerät 6 angeordnet, das fortlaufend die aktuelle Planheit des gewalzten Bandes 1 in Form von in einem Vektor $\underline{y}$ zusammengefaßten und über die Breite des Bandes 1 verteilten Planheitskenngrößen $y_1,...,y_m$ mißt. Die Planheitsmessung durch das Meßgerät 6 kann beispielsweise dadurch erfolgen, daß hier nicht gezeigte Meßrollen die Bandspannungsverteilung über der Breite des Bandes 1 erfassen. Die Planheitskenngrößen bilden die Ausgangsgrößen des Prozesses, die eingangsseitig einer Regeleinrichtung 7 zugeführt werden. Diese berechnet aus den m Ausgangsgrößen $y_1,...,y_m$ Stellgrößen $u_1,...,u_n$, mit denen die n Stellglieder des Walzgerüsts 2 über eine entsprechende Ansteuerungsvorrichtung 8 zur Beeinflussung der Bandplanheit $\underline{y}$ angesteuert werden.

Zur Unterstützung und Optimierung der Regelung der Bandplanheit $\underline{y}$ durch die Regeleinrichtung 7 werden während des laufenden Prozesses in einer Recheneinrichtung 9 die Stellgliedwirksamkeiten $\underline{W} = (w_{11},...,w_{nm})$, die die Änderungen der Ausgangsgrößen $\underline{dy} = (dy_1,...,dy_m)$ in Abhängigkeit von den Änderungen der Stellgrößen $\underline{du} = (du_1,..., du_n)$ beschreiben, gelernt und der Regeleinrichtung 7 zugeführt. Dabei werden zu jedem Zeitpunkt immer nur die Stellgliedwirksamkeiten derjenigen Stellglieder gelernt, die von der Regeleinrichtung 7 oder von Hand angesteuert werden. Die zu berechnenden Stellgliedwirksamkeiten $w_{11},...,w_{nm}$ sind von dem jeweils aktuellen Betriebspunkt der Walzanlage abhängig, der durch Betriebspunktparameter $\underline{b} = (b_1,...,b_k)$ definiert wird. Hierbei handelt es sich um Einflußgrößen, die den Prozeß zusätzlich zu den Stellgrößen $u_1,...,u_n$ beeinflussen. Bei dem hier gezeigten Beispiel sind dies die Bandbreite, die Walzkraft und die Walzendurchmesser.

Das neuronale Netzwerk 10 verknüpft die ihm eingangsseitig zugeführten Stellgrößenänderungen $\underline{du}$ und gegebenenfalls die Betriebsparameter $\underline{b}$ zu Netzwerkantworten $\underline{d\tilde{y}} = (d\tilde{y}_1,...,d\tilde{y}_m)$, die in einer Vergleichseinrichtung 11 mit den Änderungen der gemessenen Ausgangsgrößen $\underline{dy}$ verglichen werden. In Abhängigkeit von den so ermittelten Abweichungen $\underline{e} = (e_1,...,e_m)$ zwischen den Ausgangsgrößenänderungen $\underline{dy}$ und den Netzwerkantworten $\underline{d\tilde{y}}$ werden mittels eines Lernalgorithmus 12 die Netzwerkparameter des neuronalen Netzwerkes 10 im Sinne einer Verringerung dieser Abweichungen $\underline{e}$ verändert. Das so in dem neuronalen Netzwerk 10 gelernte Verhältnis der Netzwerkantworten $\underline{d\tilde{y}}$ zu den Stellgrößenänderungen $\underline{du}$ entspricht den zu lernenden Stellgliedwirksamkeiten $\underline{W}$ und wird an die Regeleinrichtung 7 zur Verbesserung der Berechnung der Stellgrößen $\underline{u}$ zugeführt.

Die funktionalen Zusammenhänge zwischen den Ausgangsgrößen $y_j$, $j=1,...,m$, und den Stellgrößen $u_i$, $i=1,...,n$, sowie den Betriebspunktparametern $b_1$, $l=1,...,k$, lassen sich wie folgt beschreiben:

$$y_j = f_j(u_1,..., u_n, b_1,...,b_k).$$

Im Kleinsignalbereich kann man diese Zusammenhänge linearisieren, so daß gilt:

$$dy_j = \frac{\partial f_j}{\partial u_1} \cdot du_1 + \frac{\partial f_j}{\partial u_2} \cdot du_2 + ... + \frac{\partial f_j}{\partial u_n} \cdot du_n,$$

wobei $\frac{\partial f_j}{\partial u_i} = w_{ij}$ Funktionen der Betriebspunktparameter $b_1,...,b_k$ sind. In anderer Schreibweise ergibt sich somit: $\underline{dy} = \underline{W} \cdot \underline{du}$, wobei $\underline{W}$ eine m x n-Matrix ist, deren Koeffizienten $w_{ij}$ den Stellgliedwirksamkeiten entsprechen.

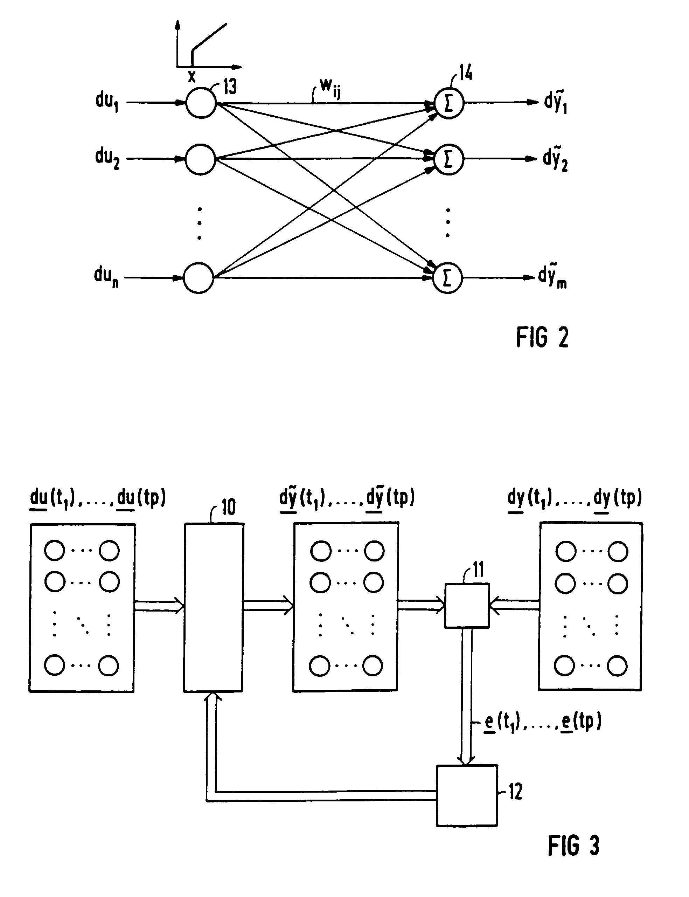

FIG 2 zeigt ein Beispiel für das neuronale Netzwerk 10 in FIG 1 zum Lernen der Stellgliedwirksamkeiten $w_{ij}$ für einen festen Betriebspunkt des Prozesses. Da der Betriebspunkt unveränderlich ist, sind die zu lernenden Stellgliedwirksamkeiten $w_{ij}$ von den Betriebspunktparametern $b_1,...,b_k$ unabhängig.

Das neuronale Netzwerk weist eine Eingangsschicht mit n Eingangselementen 13 für jede der Stellgrößenänderungen $du_i$ auf. Die Eingangselemente 13 wirken dabei als Filter, die Stellgrößenänderungen $du_i$ unterhalb eines vorgegebenen Schwellenwertes x, beispielsweise 2% des maximalen Verstellweges, zurückhalten, um Rauschanteile aus den Eingangsgrößen des neuronalen Netzwerkes herauszufiltern. Das neuronale Netzwerk weist ferner eine Ausgangsschicht mit m Ausgangselementen 14 entsprechend der Anzahl der Ausgangsgrößen $y_j$ des Prozesses auf. Die gefilterten Eingangsgrößen $du_i$ werden für jedes Ausgangselement 14 jeweils mit einem Netzwerkparameter $w_{ij}$ gewichtet und anschließend zu den Netzwerkantworten

$$d\bar{y}_j = \sum_{i=1}^{n} w_{ij} \cdot du_i$$

aufsummiert. Die Netzwerkparameter $w_{ij}$ entsprechen dabei den zu lernenden Stellgliedwirksamkeiten $w_{ij}$.

Das Training des neuronalen Netzwerkes erfolgt nach dem Backpropagationalgorithmus, indem jeweils das Minimum der Fehlerfunktion $E = 0{,}5\ e_j^2 = 0{,}5 \cdot (dy_j\text{-}d\bar{y}_j)^2$ durch Abstieg in der Gradientenrichtung gesucht wird. Dazu werden, wie bereits anhand von FIG 1 erläutert, die Netzwerkantworten $dy_j$ in der Vergleichseinrichtung 11 mit den gemessenen Änderungen der Ausgangsgrößen $d\bar{y}_j$ verglichen, wobei in dem nachgeordneten Lernalgorithmus 12 die Netzwerkparameter $w_{ij}$ mit der Lernschrittweite $\eta$ in Richtung einer Verringerung des Fehlers E adaptiv verändert werden. Dabei ergeben sich die Adaptionsschritte zu

$$dw_{ij} = -\eta\frac{\partial E}{\partial w_{ij}} = \eta(dy_j\text{-}d\bar{y}_j) \cdot du_i.$$

Um die Stellgliedwirksamkeiten $w_{ij}$ der Regeleinrichtung 7 zugänglich zu machen, werden den Eingangselementen 13 des neuronalen Netzwerkes 10 als Eingangsgrößen n Vektormuster $(0,...,0,1,0,...,0)$ mit jeweils unterschiedlichen Positionen des Wertes "Eins" zugeführt, so daß an den Ausgangselementen 14 als Netzwerkantworten die gelernten Stellgliedwirksamkeiten $w_{ij}$ für die Übergabe an die Regeleinrichtung 7 erscheinen.

Wie im folgenden anhand von FIG 3 erläutert wird, läßt sich beim Lernen der Stellgliedwirksamkeiten $w_{ij}$ eine bessere und schnellere Konvergenz erreichen, indem für jeden Lernschritt, bei dem die Netzwerkparameter $w_{ij}$ geändert werden, jeweils mehrere Datensätze der Stellgrößen $\underline{du}\ (t_1),...,\ \underline{du}(t_p)$, der Netzwerkantworten $\underline{d\bar{y}}\ (t_1),...,\ \underline{d\bar{y}}\ (t_p)$, und der Änderungen der Ausgangsgrößen $\underline{dy}(t_1),...,\underline{dy}(t_p)$ des Prozesses herangezogen werden. Hierbei ergeben sich die Adaptionsschritte zu

$$dw_{ij} = -\eta\frac{\partial E}{\partial w_{ij}} = \eta \cdot \sum_{r=1}^{p} (dy_j(t_r)\text{-}d\bar{y}_j(t_r)) \cdot du_i(t_r).$$

Wie bereits erwähnt, lassen sich mit dem in FIG 2 gezeigten neuronalen Netzwerk die Stellgliedwirksamkeiten $w_{ij}$ für einen festen Betriebspunkt des Prozesses lernen. Wenn sich dieser Betriebspunkt nur langsam ändert, kann der Lernvorgang dieser Änderung folgen. Bei schnellen oder großen Betriebspunktänderungen, d. h. bei schnellen oder großen Änderungen der oben bereits genannten Betriebspunktparameter $b_1,...,b_k$ müssen beim Lernen der Stellgliedwirksamkeiten $w_{ij}$ deren Abhängigkeiten von den Betriebspunktparametern $b_1,...,b_k$ berücksichtigt werden.

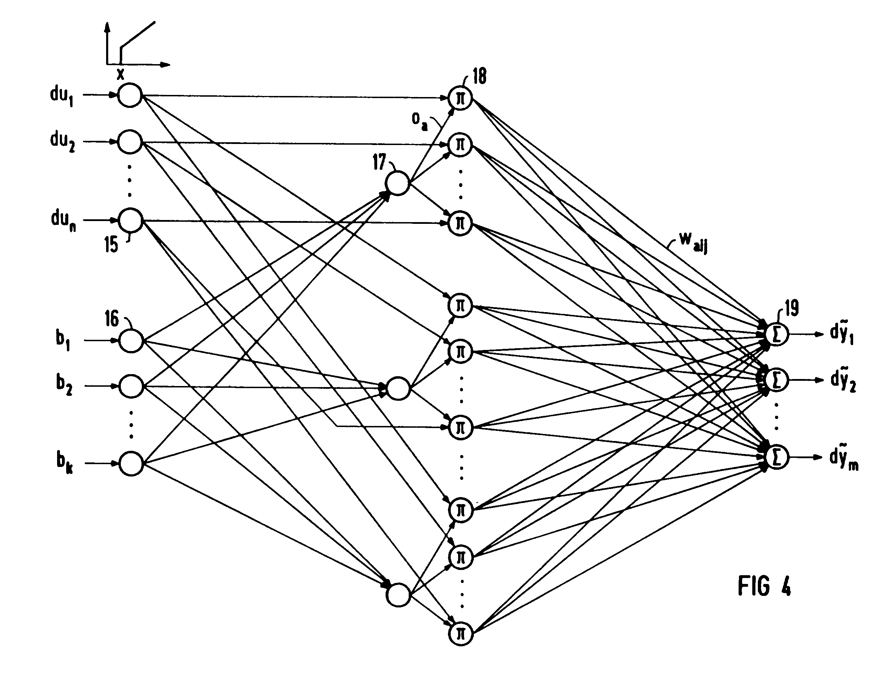

FIG 4 zeigt ein Beispiel für das neuronale Netzwerk 10, das diese Forderung erfüllt. Das neuronale Netzwerk weist eine Eingangsschicht mit n Eingangselementen 15 für jede der Stellgrößenänderungen $du_i$ und k weiteren Eingangselementen 16 für jeden der Betriebspunktparameter $b_1$ auf. Die Eingangselemente 15 wirken als Filter, die Stellgrößenänderungen $du_i$ unterhalb eines vorgebbaren Schwellenwertes x zurückhalten, um so Rauschanteile aus den Eingangsgrößen des neuronalen Netzwerkes herauszufiltern.

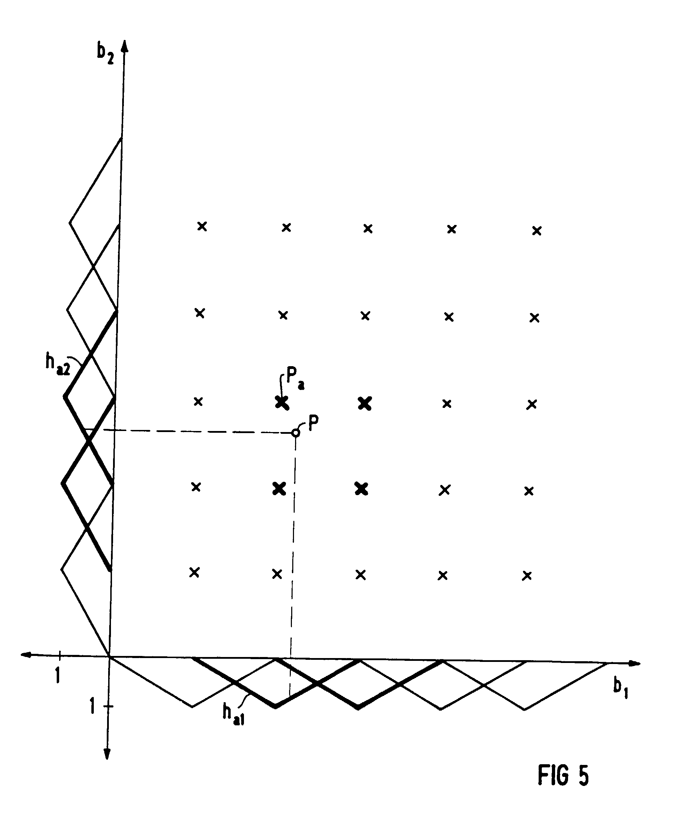

Der Eingangsschicht mit den Eingangselementen 15 und 16 ist eine verdeckte Schicht mit Elementen 17 und 18 nachgeordnet, deren Funktion zunächst anhand von FIG 5 erläutert wird. Die Betriebspunktparameter $b_1$, $l=1,...,k$, definieren einen k-dimensionalen Raum, der in FIG 5 aus Gründen der einfacheren Darstellbarkeit für den Fall k=2 dargestellt ist. In diesem k-dimensionalen Raum wird eine vorgegebene Anzahl von Betriebsstützpunkten $P_a$, $a=1,...,s$, festgelegt. Bei dem gezeigten Beispiel sind die Betriebsstützpunkte $P_a$ durch jeweils q=5 verschiedene Werte der Betriebspunktparameter $b_1$ definiert, so daß für die Anzahl s der Betriebsstützpunkte $P_a$ gilt $s=q^k$. Jedem Betriebsstützpunkt $P_a$ ist für jeden der Betriebspunktparameter $b_1$ jeweils eine Zuordnungsfunktion $h_{a1}$ zugeordnet, die an der Stelle des jeweiligen Betriebsstützpunktes $P_a$ den Wert "Eins" aufweist und davon stetig bis auf den Wert "Null" an der Stelle der unmittelbar benachbarten Betriebsstützpunkte abfällt.

Wie FIG 5 zeigt, gibt es für jeden aktuellen Betriebspunkt P des Prozesses $2^k$, hier 4, am nächsten liegende Betriebsstützpunkte $P_a$, die hier hervorgehoben sind. Die Nähe des Betriebspunktes P zu diesen direkt benachbarten Betriebsstützpunkten $P_a$ wird durch die Werte der zugehörigen Zuordnungsfunktionen $h_{a1}$ an der Stelle des Betriebspunktes P definiert, die z. B. für den hier gezeigten Betriebsstützpunkt $P_a$ zu einem Wichtungsfaktor $o_a=f(h_{a1}, h_{a2})$ verknüpft werden. Dieser Wichtungsfaktor $o_a$, $0 \leq o_a \leq 1$, ist somit ein Maß für den Abstand des Betriebspunktes P von

dem Betriebsstützpunkt $P_a$.

Die verdeckte Schicht des in FIG 4 gezeigten neuronalen Netzwerkes weist nun für jeden Betriebsstützpunkt $P_a$ jeweils ein Element 17 auf, das aus den ihm zugeführten und den aktuellen Betriebspunkt P definierenden Betriebspunktparametern $b_1$ den Wichtungsfaktor $o_a$ berechnet. Für jeden der s Betriebsstützpunkte $P_a$ werden in den insgesamt n · s Elementen 18 die gefilterten Stellgrößenänderungen $du_i$ mit den Wichtungsfaktoren $o_a$ gewichtet.

Das neuronale Netzwerk weist ferner eine Ausgangsschicht mit m Ausgangselementen 19 entsprechend der Anzahl m der Ausgangsgrößen $y_j$ des Prozesses auf. Die gewichteten Stellgrößenänderungen $o_a \cdot du_i$ werden für jedes Ausgangselement 19 jeweils mit einem Netzwerkparameter $w_{aij}$ gewichtet und anschließend zu den Netzwerkantworten

$$d\bar{y}_j = \sum_{a=1}^{s} \sum_{i=1}^{n} w_{aij} \cdot o_a \cdot du_i$$

aufsummiert. Die Adaption der Netzwerkparameter $w_{aij}$ an den realen Prozeßverlauf erfolgt in der gleichen Weise, wie dies obenstehend für das Beispiel des neuronalen Netzwerkes in FIG 2 beschrieben worden ist, wobei aber die Abweichungen $e_j$ mit den Wichtungsfaktoren $o_a$ zu $o_a \cdot e_j$ gewichtet werden.

Für die zu lernenden Stellgliedwirksamkeiten $w_{ij}$ gilt

$$\sum_{a=1}^{s} o_a \cdot w_{aij} = w_{ij}.$$

Sie werden wie auch schon bei dem Beispiel des neuronalen Netzwerkes in FIG 2 für die Regeleinrichtung 7 in der Weise zugänglich gemacht, daß den Eingangselementen 15 als Eingangsgrößen n Vektormuster (0,...,0,1,0,...,0) mit jeweils unterschiedlichen Positionen des Wertes "Eins" zugeführt werden, so daß die Ausgangselemente 19 als Netzwerkantworten die gelernten Stellgliedwirksamkeiten $w_{ij}$ erzeugen, die dann an die Regeleinrichtung 7 übergeben werden.

Auch bei dem in FIG 4 dargestellten neuronalen Netzwerk wird im Zusammenhang mit dem Lernen der Stellgliedwirksamkeiten $w_{ij}$ eine bessere und schnellere Konvergenz erreicht, indem, wie anhand von FIG 3 bereits erläutert, jeweils mehrere Datensätze der Stellgrößen $\underline{du}(t_p)$, der Netzwerkantworten $\underline{d\bar{y}}(t_1),...,\underline{d\bar{y}}(t_p)$, und der Änderungen der Ausgangsgrößen $\underline{dy}(t_1),...,\underline{dy}(t_p)$ des Prozesses herangezogen werden.

**Patentansprüche**

1. Verfahren zur Führung eines Prozesses, wobei in einer Regeleinrichtung (7) aus Meßwerten von Ausgangsgrößen $(y_j)$ des Prozesses Stellgrößen $(u_i)$ für mehrere, auf den Prozeß einwirkende Stellglieder berechnet werden,

   - wobei in einem neuronalen Netzwerk (10) die Stellgliedwirksamkeiten $(w_{ij})$ gelernt werden, die für jedes Stellglied die Abhängigkeit der Änderungen der Ausgangsgrößen $(dy_j)$ von den Änderungen der Stellgrößen $(du_i)$ beschreiben,
   - wobei die gelernten Stellgliedwirksamkeiten $(w_{ij})$ der Regeleinrichtung (7) zur Verbesserung der Berechnung der Stellgrößen $(u_i)$ zugeführt werden,
   - wobei das neuronale Netzwerk (10) zumindest zwei verdeckte Ebenen aufweist und
   - wobei die Gewichte einer verdeckten Ebene die aktuellen Betriebspunktparameter modellieren.

2. Verfahren nach Anspruch 2,
   **dadurch gekennzeichnet,**
   daß die Gewichte zumindest der zweiten verdeckten Ebene mit linearen Assoziatoren adaptiert werden.

3. Verfahren nach Anspruch 1 oder 2,
   **dadurch gekennzeichnet,**
   daß das neuronale Netzwerk (10) die ihm eingangsseitig zugeführten Stellgrößenänderungen $du_i$ über den zu lernenden Stellgliedwirksamkeiten entsprechende Netzwerkparameter $w_{ij}$ nach der Beziehung

$$d\tilde{y}_j = \sum_{i=1}^{n} w_{ij} \cdot du_i$$

zu Netzwerkantworten $d\tilde{y}_j$ verknüpft und daß die Netzwerkparameter ($w_{ij}$) in Abhängigkeit von den Abweichungen ($e_j$) zwischen den Netzwerkantworten ($d\tilde{y}_j$) und den Ausgangsgrößenänderungen ($dy_j$) im Sinne einer Verringerung dieser Abweichungen ($e_j$) verändert werden.

4. Verfahren nach Anspruch 1 oder 2,
   **dadurch gekennzeichnet,**
   daß bei Abhängigkeit der zu lernenden Stellgliedwirksamkeiten ($w_{ij}$) von Betriebspunktparametern ($b_1$) des Prozesses in dem von den Betriebspunktparametern ($b_1$) definierten mehrdimensionalen Raum eine vorgegebene Anzahl von Betriebsstützpunkten ($P_a$) festgelegt wird, daß die dem neuronalen Netzwerk (10) eingangsseitig zugeführten Stellgrößenänderungen ($du_i$) für jeden Betriebsstützpunkt ($P_a$) jeweils mit einem Wichtungsfaktor ($o_a$) gewichtet werden, der ein Maß für den Abstand zwischen dem durch die aktuellen Werte der Betriebspunktparameter ($b_1$) definierten Betriebspunkt (P) und dem jeweiligen Betriebsstützpunkt ($P_a$) ist, daß die gewichteten Stellgrößenänderungen ($o_a \cdot du_i$) nach der Beziehung

$$d\tilde{y}_j = \sum_{a=1}^{s} \sum_{i=1}^{n} w_{aij} \cdot o_a \cdot du_i$$

zu Netzwerkantworten $d\tilde{y}_j$ verknüpft werden, wobei $w_{aij}$ einstellbare Netzwerkparameter und

$$\sum_{a=1}^{s} o_a \cdot w_{aij} = w_{ij}$$

die zu lernenden Stellgliedwirksamkeiten sind, und daß die Netzwerkparameter ($w_{aij}$) in Abhängigkeit von den Abweichungen ($e_j$) zwischen den Netzwerkantworten ($d\tilde{y}_j$) und den Ausgangsgrößenänderungen ($dy_j$) im Sinne einer Verringerung dieser Abweichungen ($e_j$) verändert werden.

5. Verfahren nach Anspruch 4,
   **dadurch gekennzeichnet,**
   daß der Wert des Wichtungsfaktors ($o_a$) mit zunehmendem Abstand des Betriebspunktes (P) von dem jeweiligen Betriebsstützpunkt ($P_a$) stetig von Eins bis auf Null an der Stelle der jeweils unmittelbar benachbarten Betriebsstützpunkte abnimmt.

6. Verfahren nach einem der Ansprüche 3 bis 5,
   **dadurch gekennzeichnet,**
   daß die Veränderung der Netzwerkparameter ($w_{ij}$, $w_{aij}$) nach dem Backpropagationalgorithmus erfolgt, indem das Minimum der Fehlerfunktion $E = 0,5 \, (dy_j - d\tilde{y}_j)^2$ durch Abstieg in Gradientenrichtung gesucht wird.

7. Verfahren nach einem der Ansprüche 3 bis 6,
   **dadurch gekennzeichnet,**
   daß zur Übergabe der gelernten Stellgliedwirksamkeiten ($w_{ij}$) an die Regeleinrichtung (7) dem neuronalen Netzwerk (10) als Eingangsgrößen entsprechend der Anzahl der Stellgrößen ($u_i$) mehrere Wertemuster mit einmal dem Wert Eins an jeweils anderer Stelle und im übrigen den Werten Null zugeführt werden, wobei das neuronale Netzwerk (10) ausgangsseitig als Netzwerkantwort die Stellgliedwirksamkeiten ($w_{ij}$) erzeugt.

8. Verfahren nach einem der vorangehenden Ansprüche,
   **dadurch gekennzeichnet,**

daß die dem neuronalen Netzwerk (10) zugeführten Stellgrößenänderungen ($du_i$) zunächst einem Filter zugeführt werden, das Stellgrößenänderungen ($du_i$) unterhalb eines vorgebbaren Schwellenwertes (x) von dem neuronalen Netzwerk (10) zurückhält.

9. Verfahren nach einem der vorangehenden Ansprüche,
   **dadurch gekennzeichnet,**
   daß für jeden Lernschritt, bei dem die Netzwerkparameter ($w_{ij}$; $w_{aij}$) verändert werden, jeweils mehrere Datensätze der Stellgrößen ($du_i (t_r)$), Netzwerkantworten ($d\tilde{y}_j (t_r)$) und Ausgangsgrößenänderungen ($dy_j (t_r)$) herangezogen werden.

10. Verfahren nach einem der vorangehenden Ansprüche,
    **dadurch gekennzeichnet,**
    daß in dem Prozeß die Planheit oder das Profil von Walzgut (1) in einer Walzanlage geregelt wird, wobei die Ausgangsgrößen ($y_j$) aus über die Breite des Walzgutes (1) verteilten Bandplanheitskenngrößen, wie die Bandspannung, oder Bandprofilkenngrößen bestehen und wobei die Stellgrößen ($u_i$) Stelleingriffe zur Veränderung des Walzspaltprofils, insbesondere die Walzenschrägstellung, die Walzenbiegung, die Walzenverschiebung, und/oder die Zonenkühlung der Walzen sowie bei Sendzimir-Gerüsten die Exzentrizitätseinstellung, umfassen.

11. Verfahren nach Anspruch 10,
    **dadurch gekennzeichnet,**
    daß die Betriebspunktparameter ($b_1$) die Walzgutbreite, die Walzkraft und/oder die Walzendurchmesser umfassen.

12. Vorrichtung zur Führung eines Prozesses, wobei in einer Regeleinrichtung (7) aus Meßwerten von Ausgangsgrößen ($y_j$) des Prozesses Stellgrößen ($u_i$) für mehrere, auf den Prozeß einwirkende Stellglieder berechnet werden,

    - wobei in einem neuronalen Netzwerk (10) die Stellgliedwirksamkeiten ($w_{ij}$) gelernt werden, die für jedes Stellglied die Abhängigkeit der Änderungen der Ausgangsgrößen ($dy_j$) von den Änderungen der Stellgrößen ($du_i$) beschreiben,
    - wobei die gelernten Stellgliedwirksamkeiten ($w_{ij}$) der Regeleinrichtung (7) zur Verbesserung der Berechnung der Stellgrößen ($u_i$) zugeführt werden,
    - wobei das neuronale Netzwerk (10) zumindest zwei verdeckte Ebenen aufweist und
    - wobei die Gewichte einer verdeckten Ebene die aktuellen Betriebspunktparameter modellieren.

13. Vorrichtung nach Anspruch 12,
    **dadurch gekennzeichnet,**
    daß die Gewichte zumindest der zweiten verdeckten Ebene mit linearen Assoziatoren adaptiert werden.

14. Vorrichtung nach Anspruch 12 oder 13,
    **dadurch gekennzeichnet,**
    daß das neuronale Netzwerk (10) eine Eingangsschicht, über die ihm die Stellgrößenänderungen $du_i$ zugeführt werden, und eine Ausgangsschicht zur Abgabe von Netzwerkantworten $d\tilde{y}_j$ aufweist, wobei die Eingangs schicht und die Ausgangsschicht über den zu lernenden Stellgliedwirksamkeiten entsprechende Netzwerkparameter $w_{ij}$ nach der Beziehung

$$d\tilde{y}_j = \sum_{i=1}^{n} w_{ij} \cdot du_i$$

miteinander verknüpft sind, und daß eine Einrichtung (12) mit einem Lernalgorithmus vorhanden ist, die die Netzwerkparameter ($w_{ij}$) in Abhängigkeit von den Abweichungen ($e_j$) zwischen den Netzwerkantworten ($d\tilde{y}_j$) und den Ausgangsgrößenänderungen ($dy_j$) im Sinne einer Verringerung dieser Abweichung ($e_j$) verändert.

15. Vorrichtung nach Anspruch 13,
    **dadurch gekennzeichnet,**
    daß das neuronale Netzwerk (10) eine Eingangsschicht, über die ihm die Stellgrößenänderungen $du_i$ und Betriebspunktparameter ($b_1$) des Prozesses zugeführt werden, eine Ausgangsschicht zur Abgabe von Netzwerkantworten

d$\tilde{y}_j$ sowie eine dazwischen liegende verdeckte Schicht aufweist, daß die verdeckte Schicht eine vorgegebene Anzahl von Elementen (17) enthält, von denen jedes Element (17) jeweils einen Betriebsstützpunkt ($P_a$) in dem von den Betriebspunktparametern ($b_1$) definierten mehrdimensionalen Raum repräsentiert und aus den ihm zugeführten Betriebspunktparametern ($b_1$) einen Wichtungsfaktor $o_a$ berechnet, der ein Maß für den Abstand zwischen dem von den aktuellen Werten der Betriebspunktparameter ($b_1$) definierten Betriebspunkt (P) und dem Betriebsstützpunkt ($P_a$) ist, daß die verdeckte Schicht weitere Elemente (18) enthält, in denen die Stellgrößenänderungen $du_i$ einzeln mit den von den Elementen (17) gelieferten Wichtungsfaktoren ($o_a$) gewichtet werden, daß die verdeckte Schicht und die Ausgangsschicht über Netzwerkparameter $w_{aij}$ nach der Beziehung

$$d\tilde{y}_j = \sum_{a=1}^{s} \sum_{i=1}^{n} w_{aij} \cdot o_a \cdot du_i$$

miteinander verknüpft sind, wobei

$$\sum_{a=1}^{s} o_a \cdot w_{aij} = w_{ij}$$

die zu lernenden Stellgliedwirksamkeiten sind, und daß eine Einrichtung (12) mit einem Lernalgorithmus vorhanden ist, der die Netzwerkparameter ($w_{aij}$) in Abhängigkeit von den Abweichungen ($e_j$) zwischen den Netzwerkantworten (d$\tilde{y}_j$) und den Ausgangsgrößenänderungen ($dy_j$) im Sinne einer Verringerung dieser Abweichungen ($e_j$) verändert.

## Claims

1. A method of controlling a process wherein control variables ($u_i$) for a plurality of actuators acting on the process are calculated in a control device (7) from measured values of output variables ($y_j$) of the process,

   - wherein the actuator efficiencies ($w_{ij}$) are learned in a neural network (10), said actuator efficiencies describing, for each actuator, the dependence of the changes in the output variables ($dy_j$) upon the changes in the control variables ($du_i$),
   - wherein the learned actuator efficiencies ($w_{ij}$) are supplied to the control device (7) in order to improve the calculation of the control variables ($u_i$),
   - wherein the neural network (10) comprises at least two hidden layers and
   - wherein the weightings of a hidden layer model the current operating point parameters.

2. A method according to Claim 2, characterised in that the weightings at least of the second hidden layer are adapted with linear associators.

3. A method according to Claim 1 or 2, characterised in that the neural network (10) links the control variable changes $du_i$, with which it is supplied at its input end, via network parameters $w_{ij}$ corresponding to the actuator efficiencies to be learned, in accordance with the equation:

$$d\tilde{y}_j = \sum_{i=1}^{n} w_{ij} \cdot du_i$$

to form network responses d$\tilde{y}_j$, and that the network parameters ($w_{ij}$) are changed as a function of the deviations ($e_j$) between the network responses (d$\tilde{y}_j$) and the output variable changes ($dy_j$) so as to reduce these deviations ($e_j$).

4. A method according to Claim 1 or 2, characterised in that in the case that the actuator efficiencies ($w_{ij}$) to be learned

are dependent upon operating point parameters ($b_1$) of the process, in the multidimensional space defined by the operating point parameters ($b_1$) a predetermined number of operating interpolation points ($P_a$) is defined, that the control variable changes ($du_i$) supplied to the input of the neural network (10) are weighted for each operating interpolation point ($P_a$) with a weighting factor ($o_a$) which is a gauge of the distance between the operating point (P) defined by the current values of the operating point parameters ($b_1$) and the respective operating interpolation point ($P_a$), that the weighted control variable changes ($o_a \cdot du_i$) are linked in accordance with the equation:

$$d\tilde{y}_j = \sum_{a=1}^{s} \sum_{i=1}^{n} w_{aij} \cdot o_a \cdot du_i$$

to form network responses $d\tilde{y}_j$, where $w_{aij}$ are adjustable network parameters and

$$\sum_{a=1}^{s} o_a \cdot w_{aij} = w_{ij}$$

are the actuator efficiencies to be learned, and that the network parameters ($w_{aij}$) are changed as a function of the deviations ($e_j$) between the network responses ($d\tilde{y}_j$) and the output variable changes ($dy_j$) so as to reduce these deviations ($e_j$).

5. A method according to Claim 4, characterised in that with increasing distance between the operating point (P) and the respective operating interpolation point ($P_a$), the value of the weighting factor ($o_a$) decreases constantly from one to zero at the location of the respective directly adjacent operating interpolation points.

6. A method according to one of Claims 3 to 5, characterised in that the change in the network parameters ($w_{ij}$, $w_{aij}$) takes place in accordance with the back-propagation algorithm in that the minimum of the error function $E = 0.5 \cdot (dy_j - d\tilde{y}_j)^2$ is found by descent in the gradient direction.

7. A method according to one of Claims 3 to 6, characterised in that for the transfer of the learned actuator efficiencies ($w_{ij}$) to the control device (7), a plurality of value samples, which each contain the value one at a different location and otherwise contain zeros, are supplied to the neural network (10) as input variables in accordance with the number of control variables ($u_i$), where at its output end the neural network (10) generates the actuator efficiencies ($w_{ij}$) as network response.

8. A method according to one of the preceding claims, characterised in that the control variable changes ($du_i$) supplied to the neural network (10) are firstly fed to a filter by which control variable changes ($du_i$) below a predeterminable threshold value (x) are withheld from the neural network (10).

9. A method according to one of the preceding claims, characterised in that a plurality of data sets of the control variables ($du_i(t_r)$), network responses ($d\tilde{y}_j(t_r)$) and output variable changes ($dy_j(t_r)$) are used for each learning step in which the network parameters ($w_{ij}$; $w_{aij}$) are changed.

10. A method according to one of the preceding claims, characterised in that the flatness or the profile of rolled stock (1) in a rolling mill is regulated in the process, where the output variables ($y_j$) consist of flatness characteristics, such as strip tension, distributed over the width of the rolled stock (1), or strip profile characteristics, and where the control variables ($u_i$) comprise control actions for changing the roll gap profile, in particular roll tilting, roll bending, roll displacement and/or zone cooling of the rolls and, in the case of Sendzimir stands, eccentricity adjustment.

11. A method according to Claim 10, characterised in that the operating point parameters ($b_1$) comprise the width of the rolled stock, the rolling force and/or the diameter of the rolls.

12. A device for controlling a process wherein control variables ($u_i$) for a plurality of actuators acting on the process are calculated in a control device (7) from measured values of output variables ($y_j$) of the process,

- wherein the actuator efficiencies ($w_{ij}$) are learned in a neural network (10), said actuator efficiencies describing, for each actuator, the dependence of the changes in the output variables ($dy_j$) upon the changes in the control variables ($du_i$).
- wherein the learned actuator efficiencies ($w_{ij}$) are supplied to the control device (7) in order to improve the calculation of the control variables ($u_i$),
- wherein the neural network (10) comprises at least two hidden layers and
- wherein the weightings of a hidden layer model the current operating point parameters.

13. A device according to Claim 12, characterised in that the weightings at least of the second hidden layer are adapted with linear associators.

14. A device according to Claim 12 or 13, characterised in that the neural network (10) comprises an input layer, via which it is supplied with the control variable changes $du_i$, and an output layer for the emission of network responses $d\tilde{y}_j$, where the input layer and the output layer are linked with one another via network parameters $w_{ij}$ corresponding to the actuator efficiencies to be learned, in accordance with the equation:

$$d\tilde{y}_j = \sum_{i=1}^{n} w_{ij} \cdot du_i$$

and that a device (12) is provided comprising a learning algorithm which changes the network parameters ($w_{ij}$) as a function of the deviations ($e_j$) between the network responses ($d\tilde{y}_j$) and the output variable changes ($dy_j$) so as to reduce this deviation ($e_j$).

15. A device according to Claim 13, characterised in that the neural network (10) comprises an input layer via which it is supplied with the control variable changes $du_i$ and operating point parameters ($b_1$) of the process, an output layer for the emission of network responses $d\tilde{y}_j$ and an interposed hidden layer, that the hidden layer contains a predetermined number of elements (17), of which each element (17) in each case represents an operating interpolation point ($p_a$) in the multidimensional space defined by the operating point parameters ($b_1$) and, from the operating point parameters ($b_1$) with which it is supplied, calculates a weighting factor $o_a$ which is a gauge of the distance between the operating point (P) defined by the current values of the operating point parameters ($b_1$) and the operating interpolation point ($P_a$), that the hidden layer contains further elements (18) in which the control variable changes $du_i$ are individually weighted with the weighting factors $o_a$ supplied by the elements (17), that the hidden layer and the output layer are linked with one another via network parameters $w_{aij}$ in accordance with the equation:

$$d\tilde{y}_j = \sum_{a=1}^{s} \sum_{i=1}^{n} w_{aij} \cdot o_a \cdot du_i$$

where

$$\sum_{a=1}^{s} o_a \cdot w_{aij} = w_{ij}$$

are the actuator efficiencies to be learned, and that a device (12) is provided comprising a learning algorithm which changes the network parameters ($w_{aij}$) as a function of the deviations ($e_j$) between the network responses ($d\tilde{y}_j$) and the output variable changes ($dy_j$) so as to reduce these deviations ($e_j$).

## Revendications

1. Procédé de commande d'un processus, dans lequel on calcule dans un dispositif de réglage (7) à partir de valeurs de mesure de grandeurs de sortie ($y_j$) du processus des grandeurs réglantes ($u_i$) pour plusieurs organes de réglage agissant sur le processus,

   - dans un réseau neuronal (10), on apprend les degrés d'efficacité d'organes de réglage ($w_{ij}$) qui décrivent pour chaque actionneur la dépendance des variations des grandeurs de sortie ($dy_j$) vis-à-vis des variations des grandeurs réglantes ($du_i$),
   - on envoie les degrés d'efficacité d'organes de réglage ($w_{ij}$) appris au dispositif de réglage (7) afin d'améliorer le calcul des grandeurs réglantes ($u_i$),
   - le réseau neuronal (10) comporte au moins deux niveaux masqués et
   - les poids d'un niveau masqué modélisent les paramètres de point de fonctionnement actuels.

2. Procédé selon la revendication 1,
   caractérisé par le fait que l'on adapte les poids au moins du deuxième niveau masqué avec des moyens d'associations linéaires.

3. Procédé selon la revendication 1 ou 2,
   caractérisé par le fait que le réseau neuronal (10) combine les variations de grandeurs réglantes ($du_i$), qui lui sont envoyées en entrée, avec des paramètres de réseau ($w_{ij}$) correspondant aux degrés d'efficacité d'organes de réglage selon la relation

$$d\tilde{y}_j = \sum_{i=1}^{n} w_{ij} \cdot du_i$$

   pour former des réponses de réseau ($d\tilde{y}_j$) et on modifie les paramètres de réseau ($w_{ij}$) en fonction des écarts ($e_j$) entre les réponses de réseau ($d\tilde{y}_j$) et les variations de grandeurs de sortie ($dy_j$) afin de réduire ces écarts ($e_j$).

4. Procédé selon la revendication 1 ou 2,
   caractérisé par le fait que, lorsque les degrés d'efficacité d'organes de réglage ($w_{ij}$) à apprendre dépendent de paramètres de point de fonctionnement ($b_1$) du processus, on fixe dans l'espace à plusieurs dimensions défini par les paramètres de point de fonctionnement ($b_1$) un nombre prescrit de pôles de fonctionnement ($P_a$), on pondère les variations de grandeurs réglantes ($du_i$), envoyées en entrée au réseau neuronal (10), pour chaque point d'appui de fonctionnement ($P_a$) avec un facteur de pondération ($o_a$) qui est une mesure pour la distance entre le point de fonctionnement (P) défini par les valeurs actuelles des paramètres de point de fonctionnement ($b_1$) et le point d'appui de fonctionnement ($P_a$) considéré, on combine les variations de grandeurs réglantes pondérées ($o_a \cdot du_i$) selon la relation

$$d\tilde{y}_j = \sum_{a=i}^{s} \sum_{i=1}^{n} w_{aij} \cdot o_a \cdot du_i$$

   pour former des réponses de réseau $d\tilde{y}_j$, $w_{aij}$ étant des paramètres de réseau réglables et

$$\sum_{a=1}^{S} o_a \cdot w_{aij} = w_{ij}$$

étant les degrés d'efficacité d'organes de réglage à apprendre, et on modifie les paramètres de réseau ($w_{aij}$) en fonction des écarts ($e_j$) entre les réponses de réseau (d $\tilde{y}_j$ ) et les variations de grandeurs de sortie ($dy_j$) afin de réduire ces écarts ($e_j$).

5. Procédé selon la revendication 4,
caractérisé par le fait que, lorsque la distance du point de fonctionnement (P) au point d'appui de fonctionnement ($P_a$) considéré augmente, la valeur du facteur de pondération ($o_a$) décroît de façon continue de 1 à 0 à la position des pôles de fonctionnement immédiatement voisins.

6. Procédé selon l'une des revendications 3 à 5,
caractérisé par le fait que la modification des paramètres de réseau ($w_{ij}$, $w_{aij}$) s'effectue selon l'algorithme de rétropropagation selon lequel on cherche le minimum de la fonction d'erreurs $E = 0,5 \cdot (dy_j - d\tilde{y}_j)^2$ en descendant dans le sens du gradient.

7. Procédé selon l'une des revendications 3 à 6,
caractérisé par le fait que, pour transmettre les degrés d'efficacité d'organes de réglage ($w_{ij}$) appris au dispositif de réglage (7), on envoie au réseau neuronal (10) comme grandeurs d'entrée, selon le nombre des grandeurs réglantes ($u_i$), plusieurs modèles de valeurs avec une fois la valeur 1 à une position, à chaque fois différente, et la valeur 0 aux autres positions, le réseau neuronal (10) produisant alors en sortie comme réponses de réseau les degrés d'efficacité d'organes ce réglage ($w_{ij}$).

8. Procédé selon l'une des revendications précédentes,
caractérisé par le fait que l'on envoie d'abord les variations de grandeurs réglantes ($du_i$), envoyées au réseau neuronal (10), à un filtre qui retient des variations de grandeurs réglantes ($du_i$) inférieures à une valeur de seuil (x) pouvant être prescrite afin de ne pas les envoyer au réseau neuronal (10).

9. Procédé selon l'une des revendications précédentes,
caractérisé par le fait que, pour chaque pas d'apprentissage lors duquel les paramètres de réseau ($w_{ij}$ ; $w_{aij}$) sont modifiés, on exploite à chaque fois plusieurs blocs de données des grandeurs réglantes ($du_i(t_r)$), des réponses de réseau (d $\tilde{y}_j$ ($t_r$)) et des variations des grandeurs de sortie ($dy_j(t_r)$).

10. Procédé selon l'une des revendications précédentes,
caractérisé par le fait que, dans le processus, on règle la planéité ou le profil d'un produit laminé (1) dans un laminoir, les grandeurs de sortie ($y_j$) étant des grandeurs caractéristiques de planéité de tôle réparties sur toute la largeur au produit laminé (1), par exemple la tension de tôle, ou des grandeurs caractéristiques de profil de tôle et les grandeurs réglantes ($u_i$) comprenant des interventions de réglage destinées à modifier le profil d'emprise de laminage, notamment le réglage d'inclinaison des cylindres, la flexion des cylindres, le décalage des cylindres et/ou le refroidissement par zones des cylindres ainsi que le réglage d'excentricité dans le cas de cages Sendzimir.

11. Procédé selon la revendication 10,
caractérisé par le fait que les paramètres de point de fonctionnement ($b_1$) comprennent la largeur de produit laminé, la force de laminage et/ou le diamètre des cylindres.

12. Dispositif de commande d'un processus, dans lequel dans un dispositif de réglage (7), des grandeurs réglantes ($u_i$) pour plusieurs organes de réglage agissant sur le processus sont calculées à partir de valeurs de mesure de grandeurs de sortie ($y_j$) du processus,

- dans un réseau neuronal (10), les degrés d'efficacité d'organes de réglage ($w_{ij}$) qui décrivent pour chaque actionneur la dépendance des variations des grandeurs de sortie ($dy_j$) vis-à-vis des variations des grandeurs réglantes ($du_i$) sont appris,
- les degrés d'efficacité d'organes de réglage ($w_{ij}$) appris sont envoyés au dispositif de réglage (7) afin d'améliorer le calcul des grandeurs réglantes ($u_i$),
- le réseau neuronal (10) comporte au moins deux niveaux masqués et

- les poids d'un niveau masqué modélisent les paramètres de point de fonctionnement actuels.

13. Dispositif selon la revendication 12,
caractérisé par le fait que les poids au moins du deuxième niveau masqué sont adaptés avec des moyens d'associations linéaires.

14. Dispositif selon la revendication 12 ou 13,
caractérisé par le fait que le réseau neuronal (10) comporte une couche d'entrée, par l'intermédiaire de laquelle les variations de grandeurs réglantes ($du_i$) lui sont envoyées, et une couche de sortie, qui est destinée à délivrer des réponses de réseau (d $\tilde{y}_j$ ), la couche d'entrée et la couche de sortie étant combinées par l'intermédiaire des paramètres de réseau ($w_{ij}$) correspondant aux degrés d'efficacité d'organes de réglage à apprendre selon la relation

$$d\tilde{y}_j \; = \; \sum_{i\,=\,1}^{n} w_{ij} \cdot du_i$$

et il est prévu un dispositif (12) qui comporte un algorithme d'apprentissage et qui modifie les paramètres de réseau ($w_{ij}$) en fonction des écarts ($e_j$) entre les réponses de réseau (d $\tilde{y}_j$ ) et les variations de grandeurs de sortie ($dy_j$) afin de réduire ces écarts ($e_j$).

15. Dispositif selon la revendication 13,
caractérisé par le fait que le réseau neuronal (10) comporte une couche d'entrée, par l'intermédiaire de laquelle les variations de grandeurs réglantes ($du_i$) et des paramètres de point de fonctionnement ($b_1$) du processus lui sont envoyés, une couche de sortie, qui est destinée à délivrer des réponses de réseau (d $\tilde{y}_j$ ), ainsi qu'une couche masquée se trouvant entre les précédentes, la couche masquée contient un nombre prescrit d'éléments (17) parmi lesquels chaque élément (17) représente un point d'appui de fonctionnement ($P_a$) dans l'espace à plusieurs dimensions défini par les paramètres de point de fonctionnement ($b_1$) et calcule à partir des paramètres de point de fonctionnement ($b_1$) qui lui sont envoyés un facteur de pondération ($o_a$) qui est une mesure pour la distance entre le point de fonctionnement (P) défini par les valeurs actuelles des paramètres de point de fonction- nement ($b_1$) et le point d'appui de fonctionnement ($P_a$), la couche masquée contient d'autres éléments (18) dans lesquels les variations de grandeurs réglantes ($du_i$) sont pondérées individuellement par les facteurs de pondé- ration ($o_a$) fournis par les éléments (17), la couche masquée et la couche de sortie sont combinées par l'intermédiaire de paramètres de réseau ($w_{aij}$) selon la relation

$$d\tilde{y}_j \; = \; \sum_{a\,=\,1}^{s} \; \sum_{i\,=\,1}^{n} w_{aij} \cdot o_a \cdot du_i$$

dans laquelle

$$\sum_{a\,=\,1}^{s} o_a \cdot w_{aij} \; = \; w_{ij}$$

sont les degrés d'efficacité d'organes de réglage à apprendre, il est prévu un dispositif (12) qui comporte un algorithme d'apprentissage et qui modifie les paramètres de réseau ($w_{aij}$) en fonction des écarts ($e_j$) entre les réponses de réseau (d $\tilde{y}_j$ ) et les variations de grandeurs de sortie ($dy_j$) afin de réduire ces écarts ($e_j$).

$\underline{y} = (y_1, \ldots, y_m)$

$\underline{u} = (u_1, \ldots, u_n)$

$\underline{du} = (du_1, \ldots, du_n)$

$\underline{W} = (w_{11}, \ldots, w_{nm})$

$\underline{dy} = (dy_1, \ldots, dy_m)$

$\underline{d\tilde{y}} = (d\tilde{y}_1, \ldots, d\tilde{y}_m)$

$\underline{b} = (b_1, \ldots, b_k)$

$\underline{e} = (e_1, \ldots, e_m)$

**FIG 1**

FIG 2

FIG 3

FIG 4

FIG 5